# EUROPEAN PATENT SPECIFICATION

(11) **EP 1 290 892 B1**
(45) Date of publication and mention of the grant of the patent: **25.08.2004**
(21) Application number: 01953294.4
(22) Date of filing: 14.06.2001
(51) Int. Cl.: H04N 7/173, H04N 5/926

(54) **VIDEO INTERFACING ARRANGEMENT, DISTRIBUTION SYSTEM AND A METHOD FOR TRANSFERRING ENCODED VIDEO PROGRAMS AND SEQUENCES OVER A WIDE AREA NETWORK**
ANORDNUNG EINER VIDEO-SCHNITTSTELLE, VERTEILUNGSSYSTEM UND VERFAHREN ZUR ÜBERTRAGUNG VON KODIERTEN VIDEOPROGRAMMEN UND SEQUENZEN ÜBER EIN WEITRÄUMIGES NETZ
INSTALLATION D'INTERFACE VIDEO, SYSTEME DE DISTRIBUTION ET PROCEDE PERMETTANT DE TRANSFERER DES PROGRAMMES ET SEQUENCES VIDEO CODES VIA UN RESEAU LONGUE DISTANCE

(30) Priority: 15.06.2000 US 211590 P; 31.05.2001 FR 0107175; 14.06.2001 US 881075
(43) Date of publication of application: 12.03.2003
(73) Proprietor: FRANCE TELECOM, 92794 Issy Les Moulineaux Cedex 9 (FR)
(72) Inventor: LECOMTE, Daniel, F-75116 Paris (FR)
(74) Representative: Breese, Pierre
(86) International application number: PCT/IB2001/001421
(87) International publication number: WO 2001/097520

(56) References cited:
- WO-A-00/11871
- WO-A-96/08912
- WO-A-97/30551
- WORSLEY ET AL: "A method for briding the LAN and WAN for multimedia networking" MILITARY COMMUNICATIONS CONFERENCE, 1995. MILCOM '95, CONFERENCE RECORD, IEEE SAN DIEGO, CA, USA 5-8 NOV. 1995, NEW YORK, NY, USA,IEEE, US, 5 November 1995 (1995-11-05), pages 448-452, XP010153984 ISBN: 0-7803-2489-7

## Description

The present invention is concerned with handling of video data and television programs, or more generally any multimedia program or sequence, to authorized users and proposes a video interfacing arrangement, a video distribution or delivering system and a method for delivering video or interactive multimedia programs and/or sequences.

PCT patent application WO 00/11871 (Open Entertainment) represents the closest prior art document. This inventions concerns a transaction system for transporting media files from content provider sources to home entertainment devices. The document discloses a system and a method for enabling a user to request and download selected media files from distributed content provider sites via a communications network. The prior art system includes a plurality of user sites each including a player/receiver subsystem housed in an enclosure having a simple user interface, a plurality of content provider sites, and a transaction server site. The player/receiver subsystem enables the user to connect to the transaction server via the communications network to access a list of available media files. The user is then able to select desired files and, via the player/receiver and communications network, request the transaction server to download the selected files. The file request along with file encryption and transfer instructions are transmitted from the transaction server to the content provider site storing the requested files. Encoded files are then dynamically encrypted by the content provider site and securely downloaded to the requesting player/receiver. The player/receiver automates and manages the decryption and decode of downloaded files and the playback of those files via a conventional home television set and/or audio system.

The main problem to be solved by the present invention is to provide a device able to interconnect various video or multimedia data displays and communication devices, which is simpler than a PC, can use a television screen as interactive display device, preserves the remote control functionality to which the television viewer is used and allows restricted and controlled broadcasting of prepaid video sequences or interactive programs.

The invention also addresses the problem of providing a system for linking video or multimedia documents providers to subscribers and a method for transferring in a secured way such documents from one to the other. Other object of the invention is to allow a total control on the use of the copies and the rights to access them.

In accordance with the present invention, the above object is achieved by the provision of a video interfacing arrangement as set out in claim 28.

Advantageously, the storage or recording interface(s) comprise(s) a hard disk interface and/or an analog or digital video recorder interface, such as a video cassette recorder interface, a CD recorder or a DVD recorder.

According to a particular embodiment, the screen interface(s) comprise(s) a standard wire connection screen interface and/or a wireless screen interface and wherein the user communication and controlling interface consists of a remote control interface, such as a wireless joystick, a wireless keyboard or any device using wireless technology such as infrared or UHF.

The module may also include at least one so-called smart card or credit card style memory card reader interface and/or a video camera interface for connecting at least one local camera, transmission links with distant webcams being possible through the network connecting interface (9).

In an other embodiment, the network connecting interface is linked to a wide area network, directly or through a local area network forming an access network, and consists of a digital subscriber line interface, such as a modem or a cable interface, of an optical fiber line interface or of an air interface for radio communication.

According to a particular embodiment, the module, preferably including all the said interfaces, constitutes an independent device mounted in a corresponding protective box.

Advantageously, the module, and preferably all the interfaces, are mounted inside a television set, on the electronic control card of said television or at least partially on a separate card, the dedicated digital processing unit preferably consisting of a monoprocessor or media processor and/or being identical with the television processor.

The invention also concerns a distribution system each video interfacing arrangement being associated to at least one television screen type display as set out in claim 41.

According to a particular embodiment of the distribution system, at least one multimedia server is associated with telecommunication or broadcast reception means and that at least one multimedia server is connected to directly access the wide area network.

Advantageously, the multimedia serve(s) and/or the portal serve(s) comprise means to encode and scramble video data, especially means to add and entangle cryptographic and security information at the beginning and along the sequences, such as a video degrading algorithm decreasing the picture quality upon unauthorized viewing, copying or reviewing of a sequence.

Preferably, the multimedia server and/or the portal server comprises a preloaded decoding or descrambling software stored in its memory.

The invention mainly concerns a method for delivering MPEG-2 or MPEG-2 like video programs or sequences containing reference images such as 1-frames collected by or stored in at least one adapted multimedia server through a wide area network to authorized users provided with arrangements designed to receive video programs or the sequences, the method comprises the steps of :
- addressing a concerned multimedia server (3) or an associated portal server (4) through a wide area network (16) and ordering the transfer of one or several given video program(s) or sequence(s) to an identified video interfacing arrangement (1) also connected to said wide area network (16) for immediate display or for at least partial storage and delayed display;
- checking the user's authorization at the concerned portal server (4) and, if the case occurs, preloading an adapted transfer protocol and decode or descramble software from said portal server (4) towards said video interfacing arrangement (1);
- transferring the ordered program(s) and/or sequence(s) associated with identity, security, cryptographic and handling restriction information, preceding or entangled with the video data flow;
- displaying, transferring, recording or handling in another way the transferred video program(s) and/or sequence(s) upon user's instructions, after checking of his identity and rights, in accordance with possible handling restrictions ;
wherein the video program(s) or the sequence(s) sent to the user are divided into two parts : the first part corresponds to the original video program in which some or all of said reference images are substituted and the second part corresponds to the original reference images and to information allowing the reconstruction of the original video program from said first part.

Advantageously, the handling restrictions comprise limitations chosen in the group consisting of maximum number of viewing, maximum local storage time, fixed display time, uninterrupted display, absence of rewind and/or forward features and no copying possibility.

According to a particular solution of the invention, the preloaded decode or descramble software is:
- integrated within the video content.
- or automatically sent to the video interfacing arrangement.
- or sent to the video interfacing arrangement only on request.

Preferably, a portal server keeps a small part of the multimedia content, so that not all the information needed to watch the content is stored on the hard disk, in order to prevent illegal copy of the content, and in that the video interfacing arrangement needs to connect to the said portal server in order to get the remaining information to be able to display the multimedia content.

For a MPEG or MPEG like stream, this small part of information consist on some or all of the I pictures. The portal exchanges some or all of the I pictures in the stream sent to the video interfacing arrangement, and that the small information kept on the portal server consist of the information needed to restore the real order of I pictures, or may use a combination of the methods described in claims 18 and 19.

Preferentially, the program restoring the real order of the I pictures is partially stored in the portal server.

Advantageously, that the program restoring the real order of the I pictures is totally stored in the portal server.

Advantageously, the program restoring the real order of the I pictures is executed in the module.

The program restoring the real order of the I pictures may be executed in the portal server.

The program restoring the real order of the I pictures is advantageously executed in partially in the module, and partially in the portal server.

According to a particular embodiment, the missing I images are sent with a high level of security, being scrambled by a dedicated algorithm in the portal server in order to prevent any illegal copy of these I images.

For a given multimedia content, the content is sent only once to the portal server, which then send it to all interested modules.

The portal server may store part or whole of the multimedia content, in order to be able to send it to any module without having to ask it to the multimedia server.

The module may also store part or whole of the multimedia content on the hard disk, so that it doesn't need to stop the incoming stream whenever the user wants to pause, or to ask again for a previous content. The portal server may decide that the module stores the multimedia content on the hard disk (11).

The multimedia server may decide that the module stores the multimedia content on the hard disk.

The module itself may decide to store the multimedia content on the hard disk.

According to a specific embodiment, when establishing a certified connection between a receiving device and a multimedia server, the receiving device transmits an identifier specific to it to the portal server, the portal server then determines the address corresponding to the identifier received, the portal server having stored in its memory every identifier of authorized receiving devices with their corresponding physical address, the portal server calling then the device located at the address corresponding to the identifier received.

The completion of an additional step where the portal server asks its identifier to the called back receiving device and the confirmation that this receiving device is trying to establish a connection with this calling portal server.

According to an other specific embodiment the module can also be used as a server for delivering interactive video programs and/or sequences collected by and/or stored in its memory or hard disk.

The module can deliver its contents directly or via a portal or gate server and/or an access network, through a wide area network to authorized users equipped with another module.

Advantageously, that the portal or gate server is used as a controller for the contents which are to be delivered by the said module. Supervised by the application server, the portal or gate server can authorized or not the delivery of such content from the module.

The invention will be better understood thanks to the following description explaining the physical basis of the invention and based on the enclosed drawings showing a preferred embodiment of the latter as a non-limitative example of implementation.

In the enclosed drawings:
Figure 1 is a block diagram of a video interfacing arrangement according to the invention, and,
Figure 2 is a block diagram of a distribution system according to the invention, including at least one arrangement as shown in figure 1.

The video interfacing arrangement 1 is adapted to connect at least one display device, for example a television screen type device 2, to at least one video source 3, 5, 11, 12, 14.

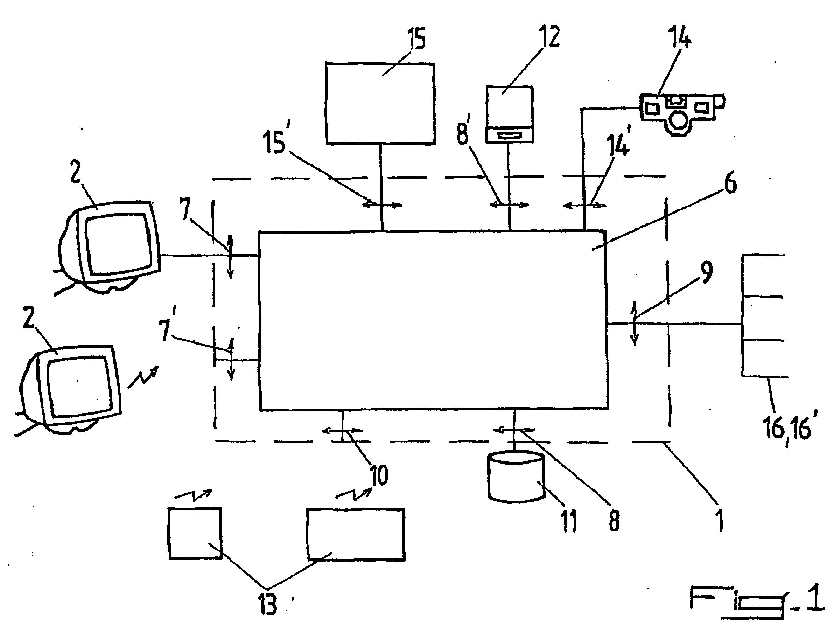

According to the invention, this arrangement is composed of a module 1 mainly including, on the one hand, a dedicated and programmed digital processing unit 6 adapted to handle, especially to decode and to descramble any type of video flow according to a preloaded decoding or descrambling software program, in order to display it, in real time or delayed in time, to store it, to record it and/or to send it over a telecommunication network, and on the other hand, at least one screen interface 7, 7', at least one storage or recording interface 8, 8', a local or wide area network connecting interface 9 and a user communication and controlling interface 10, said interfaces 7 to 10 being linked to and driven by said processing unit 6 and preferably mounted in or on said module 1 (Figure 1). The preloaded decoding or descrambling software program can be integrated within the video content, can be sent automatically by the multimedia server 3, the portal server 4, or can be sent on request by the said module 1.

The storage or recording interface (s) may comprise a hard disk 11 interface 8 and/or a video recorder interface 8', such as an interface for a analog or digital video cassette recorder 12, a CD recorder or a DVD recorder.

The hard disk 11 can be used as a buffer means to store temporarily at least a part of the video program or sequence to be displayed, in case of delayed viewing or transmission bandwidth limitations. The viewing may be delayed because of the user or the portal server.

The screen interface (s) may comprise a standard wire connection screen interface 7 and/or a wireless screen interface 7' and the user communication and controlling interface 10 may consist of a remote control 13 interface. The remote control may be, for example, a joystick, a wireless keyboard, and may use any wireless technology, such as infrared or UHF communications.

In order to be able to store and display the user's own video sequences, the module 1 can include a video camera interface 14' for connecting at least one local camera 14 transmission, links with distant webcams being possible through the network connecting interface 9.

According to an other feature of the invention, the module 1 can also be used as a server for delivering interactive video programs and/or sequences collected by and/or stored in its memory or hard disk 11. The said module 1 can deliver its contents directly or via a portal or gate server 4 and/or an access network 16', through a wide area network 16 to authorized users equipped with another module 1. The advantage of this solution is to use the portal or gate server 4 as a controller for the contents which are to be delivered by the said module 1. Supervised by the application server, the portal or gate server 4 can authorized or not the delivery of such contents from the module 1.

According to an other feature of the invention, the module 1 also integrates at least one so-called smart card or credit card style memory card reader 15 interface 15', which enables the said module 1 to identify the user and to determine his access rights (to receive and play some multimedia content category).

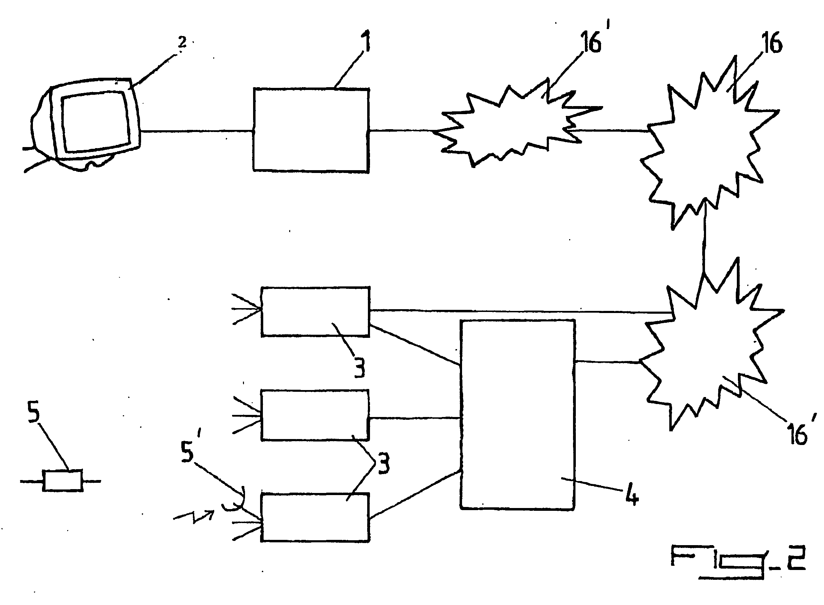

As shown in figures 1 and 2 of the drawings, the network connecting interface 9 is linked to a wide area network 16, directly or through a local area network 16' forming an access network, and consists for example of an digital subscriber line interface (DSL), such as a modem, a cable modem, of an optical fiber line interface or of a radio or IR interface for wireless communication.

The module 1 can integrate or not the DSL modem 9. If it is not integrated, the link between the said module 1 and the DSL modem 9 can be anything from wired Ethernet, USB, FireWire (iLink 1394), power line, or any wired or wireless interface.

The module 1 is able to decode and to descramble any video flow coming from an optional local camera 14, from the access network 16' or from the local memory which could be a hard disk 11. As an option, the module 1 can decode two or more incoming sources at the same time and display them in two or more windows on the same screen, or on two or more different screens. These two or more windows can be sized upon user request and can be swapped in size and position.

The module 1 is also able to display, over the decoded picture (s), some graphic information to guide the user. At the same time or not, some graphic information can be highlighted upon user request, for example, to inform the user about the selected option which can be validated when the user presses the "OK" button of the remote control or remote control keyboard 13.

The module 1 is also able to store any incoming data information and at the same time to decode (transcode if necessary), descramble and display any information coming from any connected source (network, camera, or local memory).

According to one embodiment of the invention, shown on figure 1, the module 1, preferably including all the said interfaces 7 to 10, 14' and 15', constitutes an independent device mounted in a corresponding protective box.

According to another embodiment, the module 1, and preferably all the interfaces 7 to 10, 14' and 15', are mounted inside a television set 2, on the electronic control card of said television set or at least partially on a separate card, the dedicated digital processing unit 6 preferably consisting of a monoprocessor or media processor and/or being identical or in place of the television set processor.

The digital processing unit 6 may be a multimedia processor such as, for example, the one known as TRIMEDIA from PHILIPS or the one known as MAP-CA from EQUATOR, or a DSP (digital signal processor).

The protective box or the television set could also integrate, in addition to the interfaces (the structures and transmission protocols of which are known by the person skilled in the art), some of the peripheral equipment connected to these interfaces, such as the hard disk unit 11, the smart card reader 15 or others.

The present invention also concerns the physical device used by the customer to access the data. This physical device is located in the end-user's home. It provides a set of functionalities, which manage the relevant information to be presented accordingly to the audience selection, and manages the connection and communication with the distant server.

All technical aspects such as login procedure, connection and communication with the distant server, URL address entry, - should be hidden to the user. A user-friendly interface and an intuitive mode of operation are the success keys to a widely accepted product.

The physical device easily integrates in the customer's audio/video chain, without preventing previous functionalities. It is continuously connected to the audio-visual media through which it receives and sends information. It is as well continuously connected to traditional consumer devices such as a television set or a hi-fi equipment through which it presents the selected service. The device that was previously connected to the TV set is then chained to the physical device.

The physical device manages the user's subscription. A removable security device holds the corresponding current user's rights.

Two modes of operation are defined:
Active: the physical device processes data being received or recorded in accordance to user's request
Standby: the physical device is monitoring external events triggering the transition to the active mode

The physical device may be upgraded to add new functionalities or replace old ones. This is automatically done without user's participation.

The user can select a service among the possible choices corresponding to his subscription. No restrictions are made here. All operator services are to be handled by the physical device. The basic services include to name a few: on-line TV and Radio programs (broadcast), off-line TV event (recorded by the physical device), EPG, Internet access (Web browsing, email),- The device can be served by one or more than one different service operators at the same time; each service operator being independent or not to the other ones.

The selection is achieved through a remote control device. All possible choices should be presented to the user, freeing him to enter complex and tedious information.

A subset of commands may be sent by the distant server allowing the user to access his physical device through other means like a WAP phone, for distant control such as scheduling the recording of an event.

When in active mode the physical device is grabbing from the distant server the selected data components and processes them. When in standby mode, the physical device is still monitoring the audio-visual media, ready to respond to a distant command.

Connection and bi-directional communication with the distant server are completely handled by the physical device without user involvement other than the installation procedure.

The physical device is relying on standards and/or proprietary formats for the communication with other equipment and for the processing of information. New standards and formats may be added or replace the current ones handled by the physical device, by an automatic upgrade.

The physical device has a bi-directional communication with the distant server. Received data are of several types:
- streaming data: video, audio, and associated data involved in Richmedia presentations (e.g. HTML, SMIL, XML, Flash, ShockWave).
- recording data : video, audio, and associated data being recorded for later presentation
- Internet data : Web page transfer, file transfer (download),
- service data : conditional access, physical device management data, alternate user control, ...

Transmitted data are of several types:
- request conditionally accessible data : streaming data not recorded
- acknowledge : streaming data acknowledge
- Internet data : Web server data acknowledge, file transfer to the portal server (upload)
- streaming data: video, audio, and associated data involved in Richmedia presentations (e.g. HTML, SMIL, XML, Flash, ShockWave).
- recording data : video, audio, and associated data being recorded for later presentation

The physical device offers the possibility to record and playback audio-visual components. The recording of a selected event can be scheduled by the user locally through the physical device remote control or remotely through the operator services. The physical device offers the possibility to pause (time-shift) the current program for an undetermined period of time. Playback of a recorded event (either scheduled or time-shifted) should offer fast forward, pause and rewind features.

Some recorded contents are protected against copy. In this case the protection is active during playback as well as off line against a device trying to dub the recorded data.

Playback or streaming contents may be protected with an optional analog copy protection.

The physical device offers the possibility to access the Internet. Its embedded browser allows for Web surfing. Internet data can be downloaded and visualized later. Plug-ins could be supported as long as the physical device remains easy to use. Its embedded mailer allows the user to send and receive emails. Email attachments are supported when the format is handled by the physical device, like pictures, video, or audio.

The physical device supports a conditional access system based on a combination of a descrambling algorithm and a decryption device. As an option, the decryption device is removable.

An optional smart card reader allows banking transaction for services such as on-line purchase.

The physical device supports the following features:
- Presentation of the relevant information corresponding to the service selected by the user
- Management of the connection and the communication with the distant server
- User-friendly interface and intuitive mode of operation
- Insertion in user's audio-visual chain
- User subscription management ; removable security device
- Two mode of operation : active and standby
- Automatic upgrades
- Service selection : audio-visual program or Internet contents
- Local control of the physical device through a remote control device
- Remote control of the physical device through operator services, with monitoring
- Support of standards and/or proprietary formats for communication with other equipment and for information processing
- Recording and playback of selected services
- Time-shift of current program
- Content protection
- Web browsing ; email with attachments
- Recording of selected Internet data
- Support of conditional access
- Support of smart card for banking transaction

The physical device can be based on the main following elements:
- The Application Processor (AP) which includes a general-purpose CPU, a memory controller, a graphics engine, a display controller, a general-purpose bus controller such as but not limited to a PCI bus controller, a general-purpose input/output controller, a digital video link such as but not limited to the CCIR-656 bus, an optional digital audio link such as but not limited to the I²S bus, a recording device controller such as but not limited to an IDE interface controller, an optional USB controller. As an example the AP can be the Geode SC1200 from National Semiconductor.
- The Media Processor (MP) which includes a dedicated engine for multimedia processing, a memory controller, a general-purpose bus controller such as but not limited to the PCI bus, a digital video link such as but not limited to the CCIR-656 bus, an optional digital audio link such as but not limited to the I²S bus. As an example the MP can be the MAP-CA from Equator Technologies.
- The two elements (the Application Processor (AP) and the Media Processor (MP)) can be integrated in only one physical processor called Media & Application Processor (MAP).
- The internal recording device such as but not limited to an IDE hard disk drive
- The Ethernet controller which connects to the wide area network adapter such as but not limited to a DSL modem
- The USB controller which connects to the wide area network adapter such as but not limited to a DSL modem
- The required amount of memory for the AP and the MP and information storage and buffering
- The analog and/or digital audio and video interfaces connecting to the user display unit such as a TV set and/or a hi-fi equipment
- The front panel interfaces which includes the smart card controller, the remote control receiver, the front panel buttons and indicators
- The power supply

The AP and MP are exchanging information using the following support:
- Compressed or uncompressed audio / video and data using a fast local interconnection bus such as but not limited to a PCI bus
- Compressed or uncompressed video using a fast video bus such as but not limited to the CCIR-656 video port (VP)
- Compressed or uncompressed audio using a fast local interconnection bus such as but not limited to the PCI bus or a specialized audio bus such as but not limited to an optional I²S port when available.

As an illustration, the processing of video and audio components follows these steps:
- A/V packets are received in the Ethernet or the USB controller input buffer
- A/V packets are transferred by DMA to the AP RAM
- A/V packets are parsed by the A/V codec portion running on the AP
- Raw compressed A/V data are transferred by DMA to the MP RAM
- Raw compressed A/V data are processed by the A/V codec portion running on the MP
- Uncompressed video frames are transferred on the VP port from the MP to the AP
- Uncompressed audio frames are transferred on the I²S port from the MP to the AP
- Video frames are merged with the 2D graphics and output by the analog video interface
- Audio frames are merged with the PCM audio and output by the analog audio interface

When audio and video components are recorded the raw compressed or uncompressed A/V data are transferred by DMA to the IDE controller.

When audio and video components are played back from the hard disk, compressed or uncompressed A/V data are transferred to the MP RAM to follow the normal processing.

The AP manages the USB host controller as well as the Front Panel controller.

The software of the physical device is built on the layer concept. The driver layer interfaces the hardware with the upper layers. This architecture allows to easily switch from one Operating System (OS) to another. The OS includes Real Time features to support uninterrupted audio and video play.

The physical device software relies on standards like TCP/IP, POP3 or HTTP to name a few. This architecture allows to choose applications, software components and tools from a large panel of products, and to easily develop specific applications.

The communication between the AP and the MP relies on an inter-processor communication protocol such as the Remote Procedure Call (RPC). This architecture will allow to easily move to a single CPU solution when the product is available.

Some specific areas are under dedicated control:
The audio and video codecs, to benefit from the latest enhancement in compression technology
The conditional access and access right management, to match customer's requirements
As an illustration, the physical device integrates the following software modules:
   - Real Time OS
   - Audio decoders
   - Video decoders
   - Audio drivers
   - Video & Graphics management
   - Peripheral drivers (Ethernet, USB)
   - TCP/IP stack
   - File system & IDE driver
   - Conditional access
   - HTML browser, JavaScript, SSL
   - E-mail client
   - Video on demand application
   - EPG application
   - physical device manager application
The present invention also concerns, as shown on figure 2, a distribution system for transferring encoded video or multimedia programs and sequences over a wide area network 16 towards authorized users or system subscribers for display under given conditions on adapted screens 2, characterized in that it is mainly comprised of, on the one hand, one or several multimedia servers 3, collecting and storing at least video programs and sequences and each connected, directly or via a portal or gate server 4 and/or an access network 16', to the wide area network 16 and, on the other hand, a plurality of video interfacing arrangements 1 as described before, also linked to the wide area network 16, and installed at the users' homes or at predetermined locations accessible for the users, each video interfacing arrangement 1 being associated to at least one television screen type display device 2.

Preferably at least one multimedia server 3 is associated with telecommunication or broadcast reception means 5' and at least one multimedia server 3 is connected to directly access the wide area network 16. Thus, television programs broadcasted by VHF or satellite 5. can be transferred in real time via server 3 and network 16 on to the user's screens 2.

According to the invention, the multimedia servers 3 and/or the portal server (s) 4 comprise means to encode, transcode and scramble video data, especially means to add cryptographic and security information at the beginning and along the sequences, such as a video degrading algorithm decreasing the picture quality upon unauthorized viewing, copying or reviewing of a sequence.

At least one multimedia server 3 can be integrated within a portal server 4. Any number of multimedia servers can be connected to any portal server (s) and the number of portal servers 4 is not limited.

The portal server 4 offers Web and Internet standard capabilities to give access to any kind of multimedia information. It also verifies, manages and performs the subscription of any user who wants to be connected to any multimedia servers 3 part of the system or not.

A security interface 15' can be provided as an option to the module 1. An internal or external smart card reader (SCR) 15 can be connected to the security interface 15'. It allows the user to be identified with a high security level. Any user can plug his smart card ID to any module 1. Consequently, the subscriber is identified by the portal server 4 and all the services will be provided through that module 1 activated by the user. That capability allows the user to be mobile and to have access to all its features any time and anywhere.

A user has to call the portal server 4 to perform the access to the relevant multimedia server 3. A menu is displayed on the local display screen 2. This menu can be provided either by the module 1 and/or by the portal server 4.

In one embodiment of the invention, this operation is a certification step, in order for the multimedia server 3 to be ensured that the calling module 1 is an authorized one. In this embodiment of the invention, every module 1 and every portal server 4 comprises in its memory a unique identification number (IN), such as a job number or a serial number, and a personal identification card (IC), which can be a smart card. The portal server 4 has access in its memory to every IN and every IC of every authorized calling device, every IC being associated with the physical address (in the telecom acceptation, such as an Internet Protocol address) of the corresponding calling device (identified thanks to the IC). As the module 1 calls the portal server 4, the module 1 transmits its IN and IC to the portal. server 4. Then the portal server 4 identifies in its memory the physical address corresponding to the IN and IC that have been transmitted, and calls the device located at this address stored in its memory, ignoring the address where the calling device was really located. If the calling device is an authorized one, then the address stored in the memory of the portal server 4 and the address where the calling device is located are the same, and the device that will be contacted by the portal server 4 is the device that has just transmitted its IN and IC to the portal server 4. When the portal server 4 calls back the calling device, the portal server 4 requests the IN and IC of the module 1, as well as a confirmation that the module 1 has just contacted the portal server 4. Then, if the INs and ICs are the same, and if the module 1 confirms that it has just requested a connection, the identity of the calling module 1 is certified. A symmetrical operation will be completed when the portal server 4 tries to transmit data to the module 1: the module 1 will call back the portal server 4 to certify its identity. It is important to note that such a certification can be completed in a full duplex way, without the need to hang up the phone communication, since it is possible to have several communications simultaneously on a single line such as a Digital Subscriber Line.

After the user has been identified and a multimedia program has been selected, the portal server 4 asks the corresponding multimedia server 3 to send the data to the module 1. The selected multimedia program can also be sent directly from the multimedia server 3 to the module 1 under the portal server 4 request. The data can be scrambled either by the multimedia server 3 and/or by the portal server 4. The descrambling is preferably done by the module 1 only when the data are displayed on the screen. This offers a high level of data security and prevents the multimedia data (for example a video movie) to be copied on any other device which is not compatible with the module 1 technology and protocols.

Although the present invention is more particularly directed to video data, it should be understood that any interactive multimedia information and interactive data could be handled by the present arrangement and system, the video-data being the more elaborated one.

The interactive multimedia data servers 3 can store any kind of interactive multimedia program such as movies, TV films, news, advertising, etc. All these programs are stored in a digital form of any kind of standards which are available today (such as MPEG-1, MPEG-2, MPEG-4, MPEG-7, Windows MediaVideo **®,** Quick Time **®,** Real Video ®, DivX, etc) or any coming standards based on new and future technologies such as wavelets or fractals.

The digitization of these programs and/or the coding of these programs can be performed off-line before the storage, or on-line thanks to the implementation of coders in the multimedia server 3 and/or the portal server 4. With that feature, it is also possible to connect real time program providers to the multimedia server 3. These real time program providers are the cable TVs, the satellite TVs and any TV providers.

In order to prevent the copy of a program or sequence in a digital form, a cryptographic information can be added at the beginning and along the program.

As for example, one could cite the "Unicast" protocols, wherein picture quality is decreased thanks to a degrading algorithm. This degrading algorithm is introduced when the program is sent by the portal server 4 or the multimedia server 3 and the subscriber reference is also added at the beginning and along the program. When the user (subscriber) wants to see this program, he has to introduce his smart card. The module 1 verifies if the user has the right to see it. This verification can be done through the network link 16'-16-16'-9 by the portal server 4. If the answer is positive, the program is displayed with the right picture quality. Otherwise, the program is displayed with the decreased picture quality. The degrading quality can be seen on a PC (free of charge).

According to another embodiment of the invention, all the data might not be sent from the multimedia server to the said physical device. Hence requiring the physical device to be connected to the portal server while actually watching the multimedia data. This prevents illegal copy of the said data.

This embodiment of the invention is achieved through the following mechanism. When a multimedia content is to be transferred from a multimedia server (3, 5) to the hard drive (11) of the physical device (1), it goes through a portal server (4). This one then keeps small parts of the multimedia content. Those parts are chosen all along the multimedia content stream in such a way that, while being small in size, not having those parts really prevents the watching of the multimedia content. Those parts of the content will then be transferred to the physical device (1) only when the user will actually watch the data. Those parts will never be stored on the hard drive (11). Those parts are transferred each time the user wants to watch the data again.

If a given multimedia content is to be transferred to different users, the way the portal server (4) keeps those parts is different for every user. Those "personalized coding methods" will then be transferred to every user physical device (1), so that the device can retrieve the original content when receiving the missing parts. For an improved security, those coding methods can be fully or partly computed in the physical device (1) and/or the portal server (4).

Each time the user wants to watch the multimedia contents, the physical device (1) will automatically connect to the portal server (4) to get the missing parts.

This way, the content provider will be informed each time a given user watch a multimedia content, and hence permits an accurate control over the copy management and the copy protection.

This method ensures that nobody can watch the multimedia content without being connected first to the portal server 4. This connection will be automatically established by the module 1, without any intervention of the user, and every time the multimedia content is being watched. Thus it will be possible for the portal server 4 to check if the user has effectively the authorization to watch the multimedia content every time this multimedia content is being watched.

According to this method, the module 1 transmits systematically an information representative of the user every time the user wants to watch the multimedia content, which allows a total control on the use of the copies and the rights to access them (Copy Management & Copy Protection).

This automatic and permanent connection between the module 1 and the portal server 4 is made possible thanks to the bi-directional network 16 which can be of an xDSL type, or any type that allows such a permanent bi-directional connection.

Here is an example how this can be achieved through the MPEG file architecture or through any other video architecture using I types pictures. A MPEG video stream is composed of pictures I, B and P. The B and P kinds of picture highly depend on the I kind, while the I pictures are independent from each other and can be shown 'as such' on the screen.

A way to achieve the protection is to keep some or even the totality of these I images stored in the portal server 4. Simultaneously, it is possible to substitute false I images to some of the I images sent to the physical device and stored on the hard disk 11; this substitution is completed by a substitution program based on an algorithm specific to the module 1 where the data are sent. Simultaneously, it is possible to permute some of the I images sent to the physical device and stored on the hard disk 11; this permutation is completed by a permutation program based on an algorithm specific to the module 1 where the data are sent.

The program permuting the I images can be combined with the program substituting the I images kept stored in the portal server 4.

The substitution program and the permutation program can be stored on the hard disk 11, or kept stored in the portal server 4 and downloaded when needed.

The substitution program can be totally executed on the module 1 (client side), or totally in the portal server 4 (server side), or partially on the module 1 and partially in the portal server 4.

Independently, the permutation program can be totally executed on the module 1 (client side), or totally in the portal server 4 (server side), or partially on the module 1 and partially in the portal server 4.

This function permuting the I images can be combined with the function substituting the I images stored in the portal server 4.

Every time that a user wants to watch the multimedia content, the module 1 automatically establishes a connection with the portal server which checks the authorization of the user before sending the missing I images.

It is also possible to associate a Copy Management & Copy Protection Program with the permuting function, this program being executed when the multimedia content is being watched. According to this method, the module 1 transmits systematically a message to the portal server 4 every time the user wants to watch the multimedia content, which allows a total control on the use of the copies and the rights to access them (Copy Management & Copy Protection).

Finally, the missing I images are sent to the module 1; they can be sent as such, or with a high level of security if they are scrambled by a dedicated algorithm in the portal server 4 in order to prevent any illegal use of these I images.

This solution covers three aspects: first of all, there are less data stored on the portal server 4, secondly it is possible to have a specific code for every single user, and finally the user is forced to establish a connection with the portal server 4 every time he wants to watch the multimedia content. It is important to note that this forced connection is automatically established by he module 1.

According to this invention, it is possible to send a maximum amount of data from the multimedia servers 3 to the hard-disc 11 of the module 1 in a way that it is impossible for the user to display the program on his screen 2, 2'.

In the contrary of the previous art, the multimedia data corresponding to the totality of the movie are protected, and every multimedia content stored in a module 1 is coded in a different way than the same multimedia content stored in a different module 1.

This method can be used for multimedia contents coded in the MPEG format, as well as for multimedia contents coded in other formats as long as it is possible to insulate images similar to the I images, which means images describing the totality of the information or information important enough that an other large amount of data of the stream depends on it, such as the Base Layer in the case of the wavelets for example. These I images (I standing for Important), necessary for the multimedia content to be useable, will be partially or totally stored in the portal server 4, and sent to the user after the certification of the authorization.

Also available are "Multicast" protocols which are quite equivalent to the first cited, except for the suppression of the subscriber reference, which is replaced by the Multicast information.

Some more information can also be transmitted, at the beginning and/or along the video-program such as:
- Number of display (how many times this program can be seen: from 1 to n),
- recording time: how long this program can be maintained in the module 1 (to be seen up the n times),

Features such as rewind, fast rewind, forward, fast forward are also available (or not).

The present invention also concerns a method for delivering video programs and/or sequences collected by and/or stored in adapted multimedia servers through a wide area network to authorized users provided with arrangements 1 as mentioned above, characterized in that it comprises the steps of:
Addressing the concerned multimedia server 3 or an associated portal server 4 through the wide area network 16 and ordering the transfer of one or several given video program (s) or sequence (s) to an identified video interfacing arrangement 1 also connected to said wide area network 16 for immediate display or for at least partial storage and delayed display;
Checking the user's authorization at the concerned portal server 4 and, if the case occurs, preloading an adapted transfer protocol and/or decode or descramble program from said portal server 4 towards said video interfacing arrangement 1;
Transferring the ordered program (s) and/or sequence (s) associated with identity, security, cryptographic and/or handling restriction information, preceding or mixed with the video data flow;
Displaying, transferring, recording or handling in another way the transferred video program (s) and/or sequence (s) upon user's instructions, after checking of his identity and rights, in accordance with possible handling restrictions.

The handling restrictions can comprise limitations chosen in the group consisting of maximum number of viewing, maximum local storage time, fixed display time, uninterrupted display, absence of rewind and/or forward features and no copying possibility.

The invention makes it possible for the provider to respect possible specific wishes of the authors of programs or sequences, such as for example no segmentation of the film or other multimedia work of art by the provider (no publicity cuts) and/or by the viewer (no interruption during display, suppression of the "pause" or "rewind" feature), limited temporary acquisition (self-erasure after a given storage time) or no possibility to transfer it outside the module 1.

Finally, the present invention also concerns a method for using the module 1 as a server for delivering interactive video programs and/or sequences collected by and/or stored in the module 1 through a wide area network 16, 16' to authorized users provided with arrangements 1 as mentioned above, characterized in that it comprises the steps of:
- thanks to the digital line 16, 16' the module 1 can be used as a server with characteristics equivalent to any server 3 or 5,
- the module 1 used as a server can push interactive video programs or sequences to any other module 1 through the digital network 16',
- any authorized users equipped with a module 1 can retrieve interactive video programs or sequences from any other module 1 used as a server.

As an illustrative example, the working of the system will now be described.

First, the user checks the menu on his TV screen using the remote control 13.

By selecting the program on the menu, he orders the module 1 to visualize the program. The module 1 asks the portal server 4 to retrieve the program from the corresponding multimedia server 3. Then the program is sent by the multimedia server 3 to the module 1 which decodes and displays it on the user's TV screen 2.

At the beginning of the process, before the program is sent from the multimedia server 3 to the module 1 under the control of the portal server 4, there is a preliminary exchange dialogue between the multimedia server 3 and the module 1 in order to verify which kind of decoding and/or descrambling software is available within the module 1. If the decoding and/or descrambling software is available within the module 1, the multimedia server 3 will serve the multimedia program immediately. Otherwise, the multimedia server 3 will ask the portal server 4 to send automatically a new and adapted decoding and/or descrambling software to the module 1 prior to the sending of the interactive multimedia program.

According to another embodiment of the invention, the portal 4 can also decide to send automatically a new and adapted decoding and/or descrambling software to the module 1.

According to another embodiment of the invention, the module 1 can also ask the portal 4 or the multimedia server 3 to send it a new and adapted decoding and/or descrambling software.

When arriving at the module 1, the video program informs the module 1 about the coding and/or scrambling algorithms it is based on, in order to execute the right decoding and/or descrambling software. This latter can also be sent automatically with the program or sequence to be displayed.

To summarize, the decoding and/or descrambling software can be integrated within the video content, can be sent automatically by the multimedia server 3, the portal server 4, or can be sent on request by the said module 1.

However, the network can have (or not) bandwidth limitation. This limitation can jeopardize the quality of the picture if no solution is provided to solve this problem.

If the whole transmission link (from the server 3 to the module 1) is not affected by bandwidth limitation, then the multimedia program is directly sent by the multimedia server 3 to the module 1. That can also be done through the portal server 4 or not.

The program is immediately displayed on the television screen 2. Any kind of VCR or DVD peripheral equipment or feature is under the control of the user by the means of the remote control 13. These VCR and DVD features can be offered directly by the multimedia server 3/portal server 4 or by the module 1 which can use the local hard disk memory 11 to temporarily store the incoming program while the user does a pause, rewinds, etc....

In case the whole network (from multimedia server 3 to module 1) has bandwidth limitation or time constraints, the module 1 uses its hard disk memory 11 in order to locally temporarily store and buffer the beginning of the multimedia program. The length of this buffer depends on the quality of the whole network. The module 1 should be able to store up to the entire multimedia program.

The interactive multimedia program can also be displayed in a delayed time. In that case, the multimedia program is transferred (according to previous orders), at the network speed, from the multimedia server 3 to the hard disk memory 11 of the module 1 with the possible condition to be completely transferred before a given time. Later, this program will be extracted from the hard disk memory 11 as requested by the user. All VCR and DVD features are still available during the visualization of the program.

By using any Web compatible device (WebPhone, PC, WAP phone, etc.) connected to the Web, a user can ask the portal server 4 to send a multimedia program to his module 1.

A subscriber can be located anywhere in the world and use any Web device to connect himself to a portal server 4 of the system. By using adapted security procedure, he is recognized by the portal server 4 as a right subscriber and can order any multimedia program from any multimedia server 3 to be downloaded to his module 1 (the module of the place he is in).

The multimedia program is then sent to his module 1 and is stored in the hard disk 11.

Depending on the size of the hard disk 11, large number of interactive multimedia programs can be stored and/or remotely ordered.

As indicated before, a smart card can be used to identify the user and to check that the subscriber order is accepted by its Service provider.

As an option, prepaid smart cards are available. This will offer the capability for a user to utilize his card to buy some interactive multimedia program without being a permanent subscriber (similarity with mobile phone subscribers).

Any user can have full access to the Internet and to the Web through the module 1, using the TV screen and the remote control 13.

The invention also concerns a method for optimizing the streaming between the server 3 and the video interfacing arrangement 1, through the portal server 4. The method is thought to enable some kind of multicast streaming on networks that don't have this capability. The data stream is pushed from the server 3 to the portal server 4 (using broadcast, unicast or multicast). The portal server 4 acts as a video interfacing arrangement 1 with respect to the server 3. Then the portal server 4 acts as a server with respect to some or all the video interfacing arrangement 1 which are connected to it. The aim is to reduce the stress on the server 3 and to reduce the bandwidth used on the network, while at the same time, offering a Quality of Service to the real video interfacing arrangements 1.

The portal server 4 can record part or whole of the streaming content to deliver part or whole of the stream to another video interfacing arrangement 1 later on. The video interfacing arrangements 1 will usually also record the streaming content on their hard disk 11 to reduce the bandwidth used on the network. This way, if the user wants to pause (time-shift) the current program, there's no need for the multimedia content to be sent through the network: the video interfacing arrangement 1 asks the portal server 4 which asks the server 3. If the video interfacing arrangement 1 is authorized to keep on displaying the content, the data is taken from its hard disk 11. If the video interfacing arrangement 1 wants to pull some content, it will asks the portal server 4 which may then ask the server 3.

The server 3, the portal server 4 and the video interfacing arrangement 1 may all independently decide that the multimedia content will be stored on the hard disk 11 on the video interfacing arrangement 1. Each of them may decide upon different criterion such as the estimated audience of a program, the estimated success of a program, the statistics about a given user. For example, advertising content is usually widely diffused, and as such, storing it on the hard disk 11 will prevent this program to be sent several times. The portal server 4 has a mean to check if a given program is already stored on the video interfacing arrangement 1, to prevent the portal server 4 to send it again.

The present invention is not limited to the preferred embodiment described herein and shown on the enclosed drawings, changes can be made or equivalents used without departing from the scope of the invention.

## Claims

1. Method for delivering MPEG-2 or MPEG-2 like video programs or sequences containing reference images such as I-frames collected by or stored in at least one adapted multimedia server through a wide area network to authorized users provided with arrangements designed to receive video programs or the sequences, the method comprises the steps of :
• addressing a concerned multimedia server (3) or an associated portal server (4) through a wide area network (16) and ordering the transfer of one or several given video program(s) or sequence(s) to an identified video interfacing arrangement (1) also connected to said wide area network (16) for immediate display or for at least partial storage and delayed display;
• checking the user's authorization at the concerned portal server (4) and, if the case occurs, preloading an adapted transfer protocol and decode or descramble software from said portal server (4) towards said video interfacing arrangement (1);
• transferring the ordered program(s) and/or sequence(s) associated with identity, security, cryptographic and handling restriction information, preceding or entangled with the video data flow;
• displaying, transferring, recording or handling in another way the transferred video program(s) and/or sequence(s) upon user's instructions, after checking of his identity and rights, in accordance with possible handling restrictions ;
• wherein the video program(s) or the sequence(s) sent to the user are divided into two parts : the first part corresponds to the original video program in which some or all of said reference images are substituted and the second part corresponds to the original reference images and to information allowing the reconstruction of the original video program from said first part.

2. Method according to claim 1 **characterized in that** said I-frames are substituted in the first part by random I-images.

3. Method according to claim 1 **characterized in that** said I-frames are substituted by other I-frames of the same program.

4. Method according to claim 1 **characterized in that** said I-frames are substituted according to a combination of the methods described in claims 2 and 3.

5. Method according to any one of the claims 1 to 4 **characterized in that** said second part is kept on said multimedia server.

6. Method according to any one of the claims 1 to 5 **characterized in** a user's video interfacing arrangement is automatically connected to the said multimedia server in order to get the second part to restore and to display the original video program only when the user wants to watch the video program.

7. Method according to any one of the claims 1 to 6 **characterized in that** said multimedia servers is connected on said wide area network and the program restoring the original video program is partially stored in said server.

8. Method according to any one of the claims 1 to 6 **characterized in that** said multimedia servers is connected on said wide area network and the program restoring the original video program is totally stored in said server.

9. Method according to any one of the claims 1 to 8 **characterized in that** said arrangement comprises a module (1) and the program restoring the original video program is executed in the module (1).

10. Method according to any one of the claims 1 to 8 **characterized in that** said multimedia server is connected on said wide area network and the program restoring the original video program is executed in the server.

11. Method according to any one of the claims 1 to 8 **characterized in that** said multimedia server is connected on said wide area network, said arrangement comprises a module (1) and the program restoring the original video program is executed partially in the module (1), and partially in the server.

12. Method according to any one of the claims 1 to 11 **characterized in that** said multimedia server is connected on said wide area network and the original reference images are sent with a high level of security, being scrambled by a dedicated algorithm in the multimedia server in order to prevent any illegal copy of these I images.

13. Method according to any one of the preceding claims, **characterized in that** the handling restrictions comprise limitations chosen in the group consisting of maximum number of viewing, maximum local storage time, fixed display time, uninterrupted display, absence of rewind and/or forward features and no copying possibility.

14. Method according to any one of any of the preceding claims, **characterized in that** the preloaded decode or descramble software is integrated within the video content.

15. Method according to any one of the preceding claims, **characterized in that** preloaded decode or descramble software is automatically sent to the video interfacing arrangement (1).

16. Method according to any one of the preceding claims, **characterized in that** preloaded decode or descramble software is sent to the video interfacing arrangement (1) only on request.

17. Method according to any one of the preceding claims, **characterized in that**, for a given multimedia content, the content is sent only once to the portal server (4), which then send it to all interested modules (1).

18. Method according to any one of the preceding claims, **characterized in that** the portal server (4) may store part or whole of the multimedia content, in order to be able to send it to any module (1) without having to ask it to the multimedia server (3).

19. Method according any one of the preceding claims, **characterized in that** the module (1) may store part or whole of the multimedia content on the hard disk (11), so that it doesn't need to stop the incoming stream whenever the user wants to pause, or to ask again for a previous content.

20. Method according to claim 19, **characterized in that** the portal server (4) may decide that the module (1) stores the multimedia content on the hard disk (11).

21. Method according to claim 19, **characterized in that** the multimedia server (3) may decide that the module (1) stores the multimedia content on the hard disk (11).

22. Method according to claim 19, **characterized in that** the module (1) itself may decide to store the multimedia content on the hard disk (11).

23. Method according to any one of the preceding claims, **characterized in that**, when establishing a certified connection between a receiving device and a multimedia server, the receiving device transmits an identifier specific to it to the portal server, the portal server then determines the address corresponding to the identifier received, the portal server having stored in its memory every identifier of authorized receiving devices with their corresponding physical address, the portal server calling then the device located at the address corresponding to the identifier received.

24. Method according to claim 23, **characterized in** the completion of an additional step where the portal server asks its identifier to the called back receiving device and the confirmation that this receiving device is trying to establish a connection with this calling portal server.

25. Method according any one of the preceding claims, **characterized in that** the module (1) can also be used as a server for delivering interactive video programs and/or sequences collected by and/or stored in its memory or hard disk (11).

26. Method according to claim 25, **characterized in that** the said module (1) can deliver its contents directly or via a portal or gate server (4) and/or an access network (16'), through a wide area network (16) to authorized users equipped with another module (1).

27. Method according to anyone of claims 25 to 26, **characterized in that** the portal or gate server (4) is used as a controller for the contents which are to be delivered by the said module (1). Supervised by the application server, the portal or gate server (4) can authorize or not the delivery of such content from the module (1).

28. Video interfacing arrangement for connecting at least one display device, for example a television screen type device, to at least one video source, using the method of any one of the claims 1 to 27, composed of a module (1) including, on the one hand, a dedicated and programmed digital processing unit (6) adapted to decode and to descramble any type of video flow according to a preloaded decoding or descrambling program, in order to display it, in real time or delayed in time, to store it, to record it and/or to send it over a telecommunication network, and on the other hand, at least one screen interface (7, 7'), at least one storage or recording interface (8, 8'), a local or wide area network connecting interface (9) and a user communication and controlling interface (10), said interfaces (7 to 10) being linked to and driven by said processing unit (6) and preferably mounted in or on said module (1) **characterized in that** said storage or recording interface is adapted to store or to record a first part of a video program corresponding to the original video program in which some or all of the I-frames are substituted and the video interfacing arrangement is adapted to automatically connect to a multimedia server each time a user wants to watch a video program in order to obtain a second part of the video program corresponding to some or all of the original I-frames and to information allowing the reconstruction of the original video program from said first part.

29. Video interfacing arrangement according to claim 28 **characterized in that** the video interfacing arrangement is adapted to systematically transmit the information representative of the user each time the user wants to watch the original video program in order that multimedia server checks the user's authorization before sending the user said second part kept by the multimedia server and needed to watch the original video program.

30. Video interfacing arrangement according to claim 28 or 29 **characterized in that** the program restoring said original video program is partially stored on the module (1).

31. Video interfacing arrangement according to claim 28 or 29 **characterized in that** the program restoring said original video program is totally stored on the module (1).

32. Video interfacing arrangement according to any one of the claims 28 to 31 **characterized in that** the program restoring said original video program is partially executed by the module (1).

33. Video interfacing arrangement according to any one of the claims 28 to 31 **characterized in that** the program restoring said original video program is totally executed by the module (1).

34. Video interfacing arrangement according to any one of the claims 28 to 33, wherein the storage or recording interface(s) comprise(s) a hard disk (11) interface (8) and/or a analog or digital video recorder interface (8'), such as a video cassette recorder (12) interface, a CD recorder or a DVD recorder.

35. Video interfacing arrangement according to any one of the claims 28 to 34, wherein the screen interface (s) comprise (s) a standard wire connection screen interface (7) and/or a wireless screen interface (7') and wherein the user communication and controlling interface (10) consists of a remote control (13) interface, such as a wire and/or wireless joystick, a wire and/or wireless keyboard or any device using wire or wireless technology such as infrared or UHF.

36. Video interfacing arrangement according to any one of the claims 28 to 35, wherein the module (1) also includes at least one so-called smart card or credit card style memory card reader (15) interface (15').

37. Video interfacing arrangement according to any one of the claims 28 to 36, wherein the network connecting interface (9) is linked to a wide area network (16), directly or through a local area network (16') forming an access network, and consists of a digital subscriber line interface, such as a modem, or a cable interface, of an optical fiber line interface or of an air interface for radio communication.

38. Video interfacing arrangement according to any one of the claims 28 to 37, wherein the module (1) also includes a video camera interface (14') for connecting at least one local camera (14), transmission links with distant webcams being possible through the network connecting interface (9).

39. Video interfacing arrangement according to any one of the claims 28 to 38, wherein the module (1), preferably including all the said interfaces (7 to 10, 14' and 15'), constitutes an independent device mounted in a corresponding protective box.

40. Video interfacing arrangement according to any one of the claims 28 to 38, wherein the module (1), and preferably all the interfaces (7 to 10, 14' and 15'), are mounted inside a television set (2), on the electronic control card of said television or at least partially on a separate card, the dedicated digital processing unit (6) preferably consisting of a monoprocessor or media processor and/or being identical with the television processor.

41. Distribution system for transferring encoded video programs and sequences over a wide area network towards authorized users or system subscribers for display under given conditions on adapted screens, using the method of any one of the claims 1 to 27 **characterized in that** it is comprised of, on the one hand, one or several multimedia servers (3), collecting and storing at least video programs and sequences and each connected, directly or via a portal or gate server (4) and/or an access network (16'), to the wide area network (16) and, on the other hand, a plurality of video interfacing arrangements (1) according to any one of the claims 28 to 40 also linked to the wide area network (16), and installed at the users' homes or at predetermined locations, each video interfacing arrangement (1) being associated to at least one television screen type display device (2).

42. Distribution system according to claim 41, **characterized in that** at least one multimedia server (3) is associated with telecommunication or broadcast reception means (5') and that at least one multimedia server (3) is connected to directly access the wide area network (16).

43. Distribution system according to any one of claims 41 and 42, **characterized in that** the multimedia servers (3) and/or the portal server (s) (4) comprise means to encode and scramble video data, especially means to add and entangle cryptographic and security information at the beginning and along the sequences, such as a video degrading algorithm decreasing the picture quality upon unauthorized viewing, copying or reviewing of a sequence.

44. Distribution system according to any one of the claims 41 to 43, **characterized in that** the multimedia server (3) and/or the portal server (4) comprises a preloaded decoding or descrambling software stored in its memory.

45. Distribution system according to any one of the claims 41 to 44, **characterized in that** the portal server contains means for keeping said second part needed to watch the original video program.

## Patentansprüche

1. Verfahren zur Lieferung von MPEG-2 oder MPEG-2 ähnlichen Videoprogrammen oder -sequenzen, welche Referenzbilder wie z. B. I-Rahmen enthalten, die durch mindestens einen geeigneten Multimedia Server gesammelt werden oder in ihm gespeichert werden, über ein Nahverkehrsnetz an befugte Benutzer, welche mit für den Empfang von Videoprogrammen oder -sequenzen entwickelten Anordnungen ausgestattet sind, wobei das Verfahren folgende Schritte umfasst:
- das Anschreiben eines betroffenen Multimedia Servers (3) oder eines zugeordneten Portal Servers (4) über ein Nahverkehrsnetz (16) und die Bestellung der Übermittlung eines oder mehrerer gegebenen Videoprogramme oder -sequenzen an eine identifizierte Videoschnittstellen-Anordnung (1) welche auch an das besagte Nahverkehrsnetz (16) angeschlossen ist, zur sofortigen Anzeige oder mindestens zur Teilspeicherung und verzögerten Anzeige;
- die Überprüfung der Befugnis des Benutzers des betroffenen Portal Servers (4) und, sollte der Fall vorkommen, die Vorladung eines angemessenen Übermittlungsprotokolls und Entschlüsselungs- oder Decoderprogramms von dem besagten Portal Server (4) auf die besagte Videoschnittstellen-Anordnung (1);
- die Übermittlung des/der bestellten Programms (e) und/oder Sequenz(en) zusammen mit Identitäts-, Sicherheits- Kryptographie- und Verarbeitungseinschränkungs-Informationen, welche dem Videodatenfluss vorausgehen oder mit ihm verflochten sind;
- die Anzeige, Übermittlung, Aufnahme oder Bearbeitung einer anderen Art des/der übermittelten Videoprogramms(e) und/oder Sequenz(en) auf Anweisung des Benutzers, nach der Überprüfung seiner Identität und Rechte, gemäß möglicher Verarbeitungseinschränkungen
- wobei das/die Videoprogramm(e) und Sequenz(en) in zwei Teile geteilt sind: der erste Teil entspricht dem ursprünglichen Videoprogramm, in welchem einige oder alle besagten Referenzbilder ersetzt sind, und der zweite Teil entspricht den ursprünglichen Referenzbildern und den Informationen, welche die Wiederherstellung des ursprünglichen Videoprogramms von dem besagten ersten Teil erlauben.

2. Verfahren nach Anspruch 1, **dadurch gekennzeichnet, dass** die besagten I-Rahmen in dem ersten Teil durch zufallsbedingte I-Bilder ersetzt werden.

3. Verfahren nach Anspruch 1, **dadurch gekennzeichnet, dass** die besagten I-Rahmen durch andere I-Rahmen desselben Programms ersetzt werden.

4. Verfahren nach Anspruch 1, **dadurch gekennzeichnet, dass** die besagten I-Rahmen gemäß einer Kombination der in den Ansprüchen 2 und 3 beschriebenen Verfahren ersetzt werden.

5. Verfahren nach einem der vorangehenden Ansprüche 1 bis 4, **dadurch gekennzeichnet, dass** der besagte zweite Teil auf dem Multimedia Server bewahrt wird.

6. Verfahren nach einem der Ansprüche 1 bis 6, **dadurch gekennzeichnet, dass** die Videoschnittstellen-Anordnung eines Benutzers automatisch an den besagten Multimedia Server angeschlossen ist, damit der zweite Teil wiederhergestellt wird und um das ursprüngliche Videoprogramm nur dann anzuzeigen, wenn der Benutzer das Videoprogramm sehen möchte.

7. Verfahren nach einem der Ansprüche 1 bis 6, **dadurch gekennzeichnet, dass** der besagte Multimedia Server auf dem besagten Nahverkehrsnetz angeschlossen ist, und dass das Programm, welches das ursprüngliche Videoprogramm wiederherstellt, teilweise in dem besagten Server gespeichert ist.

8. Verfahren nach einem der Ansprüche 1 bis 6, **dadurch gekennzeichnet, dass** der besagte Multimedia Server auf dem besagten Nahverkehrsnetz angeschlossen ist, und dass das Programm, welches das ursprüngliche Videoprogramm wiederherstellt, vollständig in dem besagten Server gespeichert ist.

9. Verfahren nach einem der Ansprüche 1 bis 8, **dadurch gekennzeichnet, dass** die besagte Anordnung ein Modul (1) umfasst und dass das Programm, welches das ursprüngliche Videoprogramm wiederherstellt in dem Modul ausgeführt wird.

10. Verfahren nach einem der Ansprüche 1 bis 8, **dadurch gekennzeichnet, dass** der besagte Multimedia Server auf dem besagten Nahverkehrsnetz angeschlossen ist, und dass das Programm, welches das ursprüngliche Videoprogramm wiederherstellt, auf dem Server ausgeführt wird.

11. Verfahren nach einem der Ansprüche 1 bis 8, **dadurch gekennzeichnet, dass** der besagte Multimedia Server auf dem besagten Nahverkehrsnetz angeschlossen ist, die besagte Anordnung ein Modul (1) umfasst und das Programm, welches das ursprüngliche Programm wiederherstellt, teilweise in dem Modul (1) und teilweise in dem Server ausgeführt wird.

12. Verfahren nach einem der Ansprüche 1 bis 11, **dadurch gekennzeichnet, dass** der besagte Multimedia Server auf dem besagten Nahverkehrsnetz angeschlossen ist, und die ursprünglichen Referenzbilder mit einem hohen Sicherheitsniveau geschickt werden, indem sie durch einen zugeordneten Algorithmus in den Multimedia Server kodiert werden, um jegliche rechtswidrige Kopie dieser I-Bilder zu verhindern.

13. Verfahren nach einem der vorangehenden Ansprüche, **dadurch gekennzeichnet, dass** die Verarbeitungseinschränkungen Begrenzungen umfassen, die aus der Gruppe der Höchstzahl der Besichtigungen, maximalen lokalen Speicherzeit, festgelegten Anzeigezeit, ununterbrochenen Anzeige, Abwesenheit von Rück- der Vorspulfunktionen und keine Kopiermöglichkeit gewählt sind.

14. Verfahren nach einem der vorangehenden Ansprüche, **dadurch gekennzeichnet, dass** das vorgeladene Entschlüsselungs- oder Decoderprogramm in dem Videoinhalt integriert ist.

15. Verfahren nach einem der vorangehenden Ansprüche, **dadurch gekennzeichnet, dass** das vorgeladene Entschlüsselungs- oder Decoderprogramm automatisch an die Videoschnittstellen-Anordnung (1) geschickt wird.

16. Verfahren nach einem der vorangehenden Ansprüche, **dadurch gekennzeichnet, dass** das vorgeladene Entschlüsselungs- oder Decoderprogramm nur auf Wunsch an die Videoschnittstellen-Anordnung (1) geschickt wird.

17. Verfahren nach einem der vorangehenden Ansprüche, **dadurch gekennzeichnet, dass** für einen gegebenen Multimediainhalt der Inhalt nur einmal dem Portal Server (4) zugeschickt wird, welcher ihn dann an alle interessierten Module (1) schickt.

18. Verfahren nach einem der vorangehenden Ansprüche, **dadurch gekennzeichnet, dass** der Portal Server (4) einen Teil oder den ganzen Multimediainhalt speichern kann, um ihn jeglichem Modul (1) zuschicken zu können, ohne den Multimedia Server (3) fragen zu müssen.

19. Verfahren nach einem der vorangehenden Ansprüche, **dadurch gekennzeichnet, dass** das Modul (1) einen Teil oder den ganzen Multimediainhalt auf der Festplatte (11) speichern kann, um den eintreffenden Strom nicht anhalten zu müssen, wenn der Benutzer eine Pause machen will oder um nicht erneut nach einem vorangehenden Inhalt fragen zu müssen.

20. Verfahren nach Anspruch 19, **dadurch gekennzeichnet, dass** der Portal Server (4) entscheiden kann, dass das Modul (1) den Multimediainhalt auf der Festplatte (11) speichert.

21. Verfahren nach Anspruch 19, **dadurch gekennzeichnet, dass** der Multimedia Server (4) entscheiden kann, dass das Modul (1) den Multimediainhalt auf der Festplatte (11) speichert.

22. Verfahren nach Anspruch 19, **dadurch gekennzeichnet, dass** das Modul (1) entscheiden kann, den Multimediainhalt selber auf der Festplatte (11) zu speichern.

23. Verfahren nach einem der vorangehenden Ansprüche, **dadurch gekennzeichnet, dass** bei der Herstellung einer zertifizierten Verbindung zwischen einem Empfangsmechanismus und einem Multimedia Server, der Empfangsmechanismus dem Portal Server einen sich eigenen Identifizierer übermittelt, der Portal Server dann die dem Identifizierer entsprechende Adresse bestimmt, wobei der Portal Server in seinem Speicher jeden Identifizierer von befugten Empfangsmechanismen mit ihren entsprechenden physikalischen Adressen gespeichert hat, wobei der Portal Server dann den Mechanismus, der sich an der dem empfangenen Identifizierer entsprechenden Adresse befindet, anruft.

24. Verfahren nach Anspruch 23, durch den Vollzug eines zusätzlichen Schrittes, in dem der Portal Server seinen Identifizierer zu dem zurückgerufenen Empfangsmechanismus bittet und die Bestätigung, dass dieser Empfangsmechanismus versucht, eine Verbindung mit diesem anrufenden Portal Server aufzubauen, gekennzeichnet.

25. Verfahren nach einem der vorangehenden Ansprüche, **dadurch gekennzeichnet, dass** das Modul (1) auch als Server zur Lieferung von Videoprogrammen und /oder - sequenzen, welche von in seinem Speicher oder seiner Festplatte (11) gesammelt werden und/oder in ihm gespeichert werden, dienen kann.

26. Verfahren nach einem der vorangehenden Ansprüche, **dadurch gekennzeichnet, dass** das besagte Modul (1) seinen Inhalt direkt oder über einen Portal oder Gate Server (4) und/oder einem Zugangsnetzwerk (16') durch ein Nahverkehrsnetz (16) an befugte, mit einem anderen Modul (1) ausgestatteten Benutzer liefern kann.

27. Verfahren nach einem der Ansprüche 25 bis 26, **dadurch gekennzeichnet, dass** der Portal oder Gate Server (4) als Kontrolle für die Inhalte, welche von dem besagten Modul (1) zu liefern sind, dient. Von dem Applikations-Server überwacht, kann der Portal oder Gate Server (4) die Lieferung eines solchen Inhalts von dem Modul (1) gestatten oder auch nicht.

28. Videoschnittstellen-Anordnung zur Verbindung von mindestens einem Anzeigegerät, beispielsweise einem Fernsehbildschirm-artigen Gerät, mit mindestens einer Videoquelle, mittels des Verfahrens nach einem der Ansprüche 1 bis 27, welche aus einem Modul (1) mit einerseits einer zugeordneten und programmierten digitalen Verarbeitungseinheit (6) geeignet zur Entschlüsselung und Decodierung von jeglicher Art von Videofluss nach einem vorgeladenen Entschlüsselungs- oder Decoderprogramm, um es in Echtzeit oder verzögert anzuzeigen, es zu speichern, es aufzunehmen und/oder es über ein Telekommunikationsnetzwerk zu senden, and andererseits mindestens einer Bildschirmschnittstelle (7, 7'), mindestens eine Speicher- oder Aufnahmeschnittstelle (8, 8' ) , einer Weit- oder Nahverkehrsnetz-Schnittstelle (9) und einer Benutzer Kommunikations- und Kontrollschnittstelle (10), wobei die besagten Schnittstellen (7 bis 10) an eine Verarbeitungseinheit (6) angeschlossen sind und von ihr gesteuert werden und vorzugsweise in oder auf dem besagten Modul (1) montiert sind, **dadurch gekennzeichnet, dass** die besagte Speicher- oder Aufnahmeschnittstelle geeignet ist, einen ersten Teil eines Videoprogramms zu speichern und/oder aufzunehmen, welches dem ursprünglichen Videoprogramm entspricht, in welchem einige oder alle I-Bilder ersetzt sind und die Videoschnittstellen-Anordnung geeignet ist, sich automatisch an einen Multimedia Server anzuschlie_en, wenn ein Benutzer ein Videoprogramm sehen will, um einen zweiten Teil des Videoprogramms zu erhalten, welches einigen oder allen der ursprüngliche I-Rahmen und der Information nötig zur Wiederherstellung des ursprünglichen Videos von dem besagten ersten Teil, entspricht.

29. Videoschnittstellen-Anordnung nach Anspruch 28, **dadurch gekennzeichnet, dass** die Videoschnittstellen-Anordnung geeignet ist, die repräsentative Information des Benutzers systematisch zu übermitteln, wenn der Benutzer das ursprüngliche Videoprogramm sehen möchte, so dass der Multimedia Server die Befugnis des Benutzers überprüft, bevor er dem Benutzer den zweiten Teil, der von dem Multimedia Server bewahrt wird und welcher zur Besichtigung des ursprünglichen Videoprogramms nötig ist, sendet.

30. Videoschnittstellen-Anordnung nach Anspruch 28 oder 29, **dadurch gekennzeichnet, dass** das Programm, welches das besagte ursprüngliche Videoprogramm wiederherstellt, teilweise auf dem Modul (1) gespeichert ist.

31. Videoschnittstellen-Anordnung nach Anspruch 28 oder 29, **dadurch gekennzeichnet, dass** das Programm, welches das besagte ursprüngliche Videoprogramm wiederherstellt, vollständig auf dem Modul (1) gespeichert ist.

32. Videoschnittstellen-Anordnung nach einem der Ansprüche 28 bis 31, **dadurch gekennzeichnet, dass** das Programm, welches das besagte ursprüngliche Videoprogramm wiederherstellt, teilweise von dem Modul (1) ausgeführt wird.

33. Videoschnittstellen-Anordnung nach einem der Ansprüche 28 bis 31, **dadurch gekennzeichnet, dass** das Programm, welches das besagte ursprüngliche Videoprogramm wiederherstellt, vollständig von dem Modul (1) ausgeführt wird.

34. Videoschnittstellen-Anordnung nach einem der Ansprüche 28 bis 33, wobei die Speicher- oder Aufnahmeschnittstelle(n) eine Festplatten(11)-Schnittstelle (8) und/oder eine analoge oder digitale Videorekorderschnittstelle (8'), wie eine Videokassettenrekorder(12)-Schnittstelle, ein CD-Rekorder oder DVD-Rekorder umfasst/umfassen.

35. Videoschnittstellen-Anordnung nach einem der Ansprüche 28 bis 34, wobei die Bildschirmschnittstelle(n) eine Standard Kabel-Bildschirmschnittstelle (7) und/oder eine kabellose Bildschirmschnittstelle (7') umfasst/umfassen, und wobei die Benutzer Kommunikations- und Kontroll-Schnittstelle (10) aus einer Fernbedienungsschnittstelle (13), wie einem Kabel- oder kabellosen Joystick, einer Kabel- oder kabellosen Tastatur oder jeglichem Mechanismus mit Kabelverbindung oder kabelloser Technologie wie beispielsweise Infrarot oder UHF, besteht.

36. Videoschnittstellen-Anordnung nach einem der Ansprüche 28 bis 35, **dadurch gekennzeichnet, dass** das Modul (1) auch mindestens eine sogenannte Smart Card oder Kreditkarten artige Speicherkartenlesungs (15)-Schnittstelle(15') umfasst.

37. Videoschnittstellen-Anordnung nach einem der Ansprüche 28 bis 36, wobei die Netzwerkanschluss-Schnittstelle (9) an ein Nahverkehrsnetz (16) angeschlossen ist, entweder direkt oder über ein Weitverkehrsnetz (16'), um ein Zugangsnetzwerk zu bilden, und aus einer digitalen Abonnentenlinien-Schnittstelle, wie beispielweise einem Modem oder einer Kabelschnittstelle, aus einer optischen Faser-Schnittstelle oder einer Luftschnittstelle für Funkkommunikation besteht.

38. Videoschnittstellen-Anordnung nach einem der Ansprüche 28 bis 37, wobei das Modul (1) auch eine Videokameraschnittstelle (14') zur Verbindung von mindestens einer lokalen Kamera (14) enthält, wobei Übermittlungsverbindungen mit Fern-Webcams über die Netzwerkanschluss-Schnittstelle möglich sind.

39. Videoschnittstellen-Anordnung nach einem der Ansprüche 28 bis 38, wobei das Modul (1), welches vorzugsweise alle besagten Schnittstellen (7 bis 10, 14' und 15') enthält, einen unabhängigen Mechanismus, welcher in einem entsprechenden Schutzgehäuse eingebaut ist, bildet.

40. Videoschnittstellen-Anordnung nach einem der Ansprüche 28 bis 38, wobei das Modul (1) und vorzugsweise alle Schnittstellen (7 bis 10, 14' und 15') in einem Fernsehapparat (2) eingebaut sind, auf der elektronischen Steuerungskarte des besagten Fernsehers oder mindestens teilweise auf einer getrennten Karte, wobei die zugeordnete digitale Verarbeitungseinheit (6) vorzugsweise aus einem Monoprozessor oder Mediaprozessor besteht, welcher auch /oder dem Fernsehprozessor gleicht.

41. Verteilersystem zur Übermittlung von verschlüsselten Videoprogrammen und -sequenzen über ein Nahverkehrsnetz an befugte Benutzer und Systemabonnenten zur Anzeige unter gegebenen Bedingungen auf geeigneten Bildschirmen, mit dem Verfahren der Ansprüche 1 bis 27, **dadurch gekennzeichnet, dass** es einerseits aus einem oder mehreren Multimedia Servern (3) besteht, welche mindestens Videoprogramme und -sequenzen sammeln und speichern und welche jeweils direkt oder über einen Portal oder Gate Server (4) und/oder einem Zugangsnetzwerk (16') mit dem Nahverkehrsnetz (16) verbunden sind, und andererseits, einer Mehrzahl von Videoschnittstellen-Anordnungen (1) nach einem der Ansprüche 28 bis 40, welche auch mit dem Nahverkehrsnetz (16) verbunden sind, und in dem Heim der Benutzer oder an vorbestimmten Orten installiert sind, wobei jede Videoschnittstellen-Anordnung (1) mindestens einem Fernsehbildschirm artigen Anzeigemechanismus (2) zugeordnet ist.

42. Verteilersystem nach Anspruch 41, **dadurch gekennzeichnet, dass** mindestens ein Multimedia Server (3) mit Telekommunikations- oder Sende-Empfangsmitteln (5') verbunden ist, und dass mindestens ein Multimedia Server (3) angeschlossen ist, um direkten Zugang zu dem Nahverkehrsnetz (16) zu haben.

43. Verteilersystem nach einem der Ansprüche 41 und 42, **dadurch gekennzeichnet, dass** die Multimedia Server (3) und/oder der/die Portal Server (4) Mittel zur Verschlüsselung und Codierung von Videokarten umfassen, insbesondere Mittel, um kryptographische und Sicherheits-Information am Beginn oder bei der Sequenz hinzuzufügen oder verwickeln, wie z.B. ein Video degradierender Algorithmus, welcher die Bildqualität bei unbefugter Besichtigung, Kopieren oder erneuter Besichtigung einer Sequenz, beeinträchtigt.

44. Verteilersystem nach einem der Ansprüche 41 bis 43, **dadurch gekennzeichnet, dass** der Multimedia Server (3) und/oder der Portal Server (4) ein in seinem Speicher gespeicherte, vorgeladenes Entschlüsselungs- oder Decoderprogramm umfasst.

45. Verteilersystem nach einem der Ansprüche 41 bis 44, **dadurch gekennzeichnet, dass** der Portal Server Mittel zur Aufbewahrung des besagten zweiten, zur Besichtigung des ursprünglichen Videoprogramms nötigen Teils enthält.

## Revendications

1. Procédé de livraison de séquences ou de programmes vidéo MPEG-2 ou similaires au MPEG-2 contenant des images de référence comme des images I recueillies par ou enregistrées sur au moins un serveur multimédia adapté par l'intermédiaire d'un réseau étendu pour des utilisateurs autorisés pourvus de configurations conçues pour recevoir des programmes ou des séquences vidéo, le procédé comprenant les étapes consistant à :
adresser un serveur multimédia concerné (3) ou un serveur de portail connexe (4) par l'intermédiaire d'un réseau étendu (16) et commander le transfert d'un ou de plusieurs programmes ou d'une ou de plusieurs séquences vidéo vers une configuration d'interface vidéo identifiée (1) également connectée audit réseau étendu (16) pour un affichage immédiat ou pour au moins un stockage partiel et un affichage différé ;
vérifier l'autorisation de l'utilisateur au niveau du serveur de portail concerné (4) et, si le cas se présente, précharger un protocole de transfert adapté et décoder ou désembrouiller un logiciel à partir dudit serveur de portail (4) vers ladite configuration d'interface vidéo (1) ;
transférer le ou les programmes commandés et/ou la ou les séquences commandées associés aux informations d'identité, de sécurité, cryptographiques et de restriction de gestion avant ou entremêlés avec le flux de données vidéo ;
afficher, transférer, enregistrer ou gérer d'une autre façon le ou les programmes et/ou la ou les séquences vidéo transférés sur les instructions de l'utilisateur, après contrôle de son identité et de ses droits, en conformité avec les restrictions de gestion éventuelles ;
dans lequel le ou les programmes vidéo ou la ou les séquences vidéo envoyés à l'utilisateur sont divisés en deux parties : la première partie correspond au programme vidéo original dans lequel certaines desdites ou toutes lesdites images de référence sont substituées et la seconde partie correspond aux images de référence originales et aux informations permettant la reconstruction du programme vidéo original à partir de ladite première partie.

2. Procédé selon la revendication 1, **caractérisé en ce que** lesdites images I sont substituées dans la première partie par des images I aléatoires.

3. Procédé selon la revendication 1, **caractérisé en ce que** lesdites images I sont substituées par d'autres images I du même programme.

4. Procédé selon la revendication 1, **caractérisé en ce que** lesdites images I sont substituées selon une combinaison des procédés décrits dans les revendications 2 et 3.

5. Procédé selon l'une quelconque des revendications 1 à 4, **caractérisé en ce que** ladite seconde partie est conservée sur ledit serveur multimédia.

6. Procédé selon l'une quelconque des revendications 1 à 5, **caractérisé en ce que** la configuration d'interface vidéo d'un utilisateur est automatiquement connectée audit serveur multimédia afin que la seconde partie puisse restaurer et afficher le programme vidéo original uniquement lorsque l'utilisateur veut regarder le programme vidéo.

7. Procédé selon l'une quelconque des revendications 1 à 6, **caractérisé en ce que** ledit serveur multimédia est connecté audit réseau étendu et le programme restaurant le programme vidéo original est partiellement stocké sur ledit serveur.

8. Procédé selon l'une quelconque des revendications 1 à 6, **caractérisé en ce que** ledit serveur multimédia est connecté audit réseau étendu et le programme restaurant le programme vidéo est totalement stocké sur ledit serveur.

9. Procédé selon l'une quelconque des revendications 1 à 8, **caractérisé en ce que** ladite configuration comprend un module (1) et le programme restaurant le programme vidéo original est exécuté sur le module (1).

10. Procédé selon l'une quelconque des revendications 1 à 8, **caractérisé en ce que** ledit serveur est connecté audit réseau étendu et le programme restaurant le programme vidéo original est exécuté sur le serveur.

11. Procédé selon l'une quelconque des revendications 1 à 8, **caractérisé en ce que** ledit serveur multimédia est connecté audit réseau étendu, ladite configuration comprend un module (1) et le programme restaurant le programme vidéo original est partiellement exécuté sur le module (1) et partiellement sur le serveur.

12. Procédé selon l'une quelconque des revendications 1 à 11, **caractérisé en ce que** ledit serveur multimédia est connecté audit réseau étendu et les images de référence originales sont envoyées avec un niveau élevé de sécurité, en étant embrouillées avec un algorithme dédié sur le serveur multimédia afin d'empêcher toute copie illégale de ces images I.

13. Procédé selon l'une quelconque des revendications précédentes, **caractérisé en ce que** les restrictions de gestion comprennent les limitations choisies dans le groupe consistant en un nombre maximum d'affichage, une durée de stockage local maximum, une durée d'affichage fixe, un affichage ininterrompu, une absence de fonction de retour et/ou d'avance et aucune possibilité de copie.

14. Procédé selon l'une quelconque des revendications précédentes, **caractérisé en ce que** le logiciel de décodage ou de désembrouillage préchargé est intégré à l'intérieur du contenu vidéo.

15. Procédé selon l'une quelconque des revendications précédentes, **caractérisé en ce que** le logiciel de décodage ou de désembrouillage est automatiquement envoyé à la configuration d'interface vidéo (1).

16. Procédé selon l'une quelconque des revendications précédentes, **caractérisé en ce que** le logiciel de décodage ou de désembrouillage est envoyé à la configuration d'interface vidéo (1) uniquement sur demande.

17. Procédé selon l'une quelconque des revendications précédentes, **caractérisé en ce que**, pour un contenu multimédia donné, le contenu est envoyé seulement une fois au serveur de portail (4), qui l'envoie ensuite à tous les modules intéressés (1).

18. Procédé selon l'une quelconque des revendications précédentes, **caractérisé en ce que** le serveur de portail (4) peut stocker une partie ou l'intégralité du contenu multimédia, afin d'être capable de l'envoyer à n'importe quel module (1) sans devoir le demander au serveur multimédia (3).

19. Procédé selon l'une quelconque des revendications précédentes, **caractérisé en ce que** le module (1) peut stocker une partie ou l'intégralité du contenu multimédia sur le disque dur (11), de sorte qu'il n'a pas besoin d'interrompre le flux entrant chaque fois que l'utilisateur veut faire une pause ou de redemander un contenu précédent.

20. Procédé selon la revendication 19, **caractérisé en ce que** le serveur de portail (4) peut décider que le module (1) stocke le contenu multimédia sur le disque dur (11).

21. Procédé selon la revendication 19, caractérisé en ce le serveur multimédia (3) peut décider que le module (1) stocke le contenu multimédia sur le disque dur (11).

22. Procédé selon la revendication 19, **caractérisé en ce que** le module (1) lui-même peut décider de stocker le contenu multimédia sur le disque dur (11).

23. Procédé selon l'une quelconque des revendications précédentes, **caractérisé en ce que**, lors de l'établissement d'une connexion certifiée entre un dispositif de réception et un serveur multimédia, le dispositif de réception transmet un identifiant qui lui est propre au serveur de portail, le serveur de portail détermine ensuite l'adresse correspondant à l'identifiant reçu, le serveur de portail ayant stocké dans sa mémoire chaque identifiant de dispositifs de réception autorisés avec son adresse physique correspondante, le serveur de portail appelant ensuite le dispositif situé à l'adresse correspondant à l'identifiant reçu.

24. Procédé selon la revendication 23, **caractérisé par** la réalisation d'une étape supplémentaire dans laquelle le serveur de portail demande son identifiant au dispositif de réception appelé et la confirmation que ce dispositif de réception essaie d'établir une connexion avec ce serveur de portail appelant.

25. Procédé selon l'une quelconque des revendications précédentes, **caractérisé en ce que** le module (1) peut également être utilisé comme un serveur pour livrer des programmes vidéo interactifs et/ou des séquences vidéo interactives recueillis par et/ou enregistrés dans sa mémoire ou sur son disque dur (11).

26. Procédé selon la revendication 25, **caractérisé en ce que** ledit module (1) peut livrer son contenu directement ou via un serveur de portail ou de passerelle (4) et/ou un réseau d'accès (16'), par l'intermédiaire d'un réseau étendu (16) à des utilisateurs autorisés dotés d'un autre module (1).

27. Procédé selon l'une quelconque des revendications précédentes 25 à 26, **caractérisé en ce que** le serveur de portail ou de passerelle (4) est utilisé comme un contrôleur des contenus qui doivent être livrés par ledit module (1). Supervisé par le serveur d'application, le serveur de portail ou de passerelle (4) peut autoriser ou non la livraison d'un tel contenu à partir du module (1).

28. Configuration d'interface vidéo pour connecter au moins un dispositif d'affichage, par exemple un dispositif de type écran de télévision, à au moins une source vidéo, au moyen d'un procédé selon l'une quelconque des revendications 1 à 27, composé d'un module (1) comprenant d'une part, une unité de traitement numérique programmée et dédiée (6) adaptée au décodage et au désembrouillage de tout type de flux de données vidéo selon un programme de décodage et de désembrouillage préchargé, afin de l'afficher, en temps réel ou de manière différée, de le stocker, de l'enregistrer et/ou de l'envoyer par le biais d'un réseau de communication, et d'autre part, au moins une interface écran (7, 7'), au moins une interface de stockage ou d'enregistrement (8, 8'), une interface de connexion au réseau local ou étendu (9) et une interface de contrôle et de communication avec les utilisateurs (10), lesdites interfaces (7 à 10) étant reliées à et commandées par ladite unité de traitement (6) **caractérisée en ce que** ladite interface de stockage ou d'enregistrement est adaptée pour stocker ou enregistrer une première partie d'un programme vidéo correspondant au programme vidéo original dans lequel certaines ou toutes les images I sont substituées et la configuration d'interface vidéo est adaptée pour se connecter automatiquement à un serveur multimédia chaque fois qu'un utilisateur veut regarder un programme vidéo correspondant à certaines ou à toutes les images I originales et aux informations permettant la reconstruction d'un programme vidéo original à partir de ladite première partie.

29. Configuration d'interface vidéo selon la revendication 28, **caractérisé en ce que** la configuration d'interface vidéo est adaptée pour transmettre systématiquement les informations propres à l'utilisateur chaque fois que l'utilisateur veut regarder le programme vidéo original de sorte que le serveur multimédia vérifie l'autorisation de l'utilisateur avant d'envoyer à l'utilisateur ladite seconde partie conservée par le serveur multimédia et requise pour regarder le programme vidéo original.

30. Configuration d'interface vidéo selon la revendication 28 ou 29, **caractérisée en ce que** le programme restaurant ledit programme vidéo original est partiellement stocké sur le module (1).

31. Configuration d'interface vidéo selon la revendication 28 ou 29, **caractérisée en ce que** le programme restaurant ledit programme vidéo original est totalement stocké sur le module (1).

32. Configuration d'interface vidéo selon l'une quelconque des revendications 28 à 31, **caractérisée en ce que** le programme restaurant ledit programme vidéo original est partiellement exécuté par le module (1).

33. Configuration d'interface vidéo selon l'une quelconque des revendications 28 à 31, **caractérisé en ce que** le programme restaurant ledit programme vidéo original est totalement exécuté par le module (1).

34. Configuration d'interface vidéo selon l'une quelconque des revendications 28 à 33, dans laquelle la ou les interfaces de stockage ou d'enregistrement comprennent un disque dur (11), une interface (8) et/ou une interface d'enregistrement vidéo numérique ou analogique (8'), comme une interface de magnétoscope (12), un graveur de CD ou un graveur de DVD.

35. Configuration d'interface vidéo selon l'une quelconque des revendications 28 à 34, dans laquelle la ou les interfaces d'écran comprennent une interface d'écran de connexion de câblage standard (7) et/ou une interface d'écran sans fil (7') et dans laquelle l'interface de contrôle et de communication avec les utilisateurs (10) consiste en une interface de contrôle à distance (13), comme un joystick câblé et/ou sans fil, un clavier câblé et/ou sans fil ou n'importe quel dispositif utilisant une technologie câblée ou sans fil comme l'infrarouge ou l'ultra haute fréquence.

36. Configuration d'interface vidéo selon l'une quelconque des revendications 28 à 35, dans laquelle le module (1) comprend également au moins une interface (15') de soi-disant lecteur de carte mémoire (15) de type carte à puce ou carte de crédit.

37. Configuration d'interface vidéo selon l'une quelconque des revendications 28 à 36, dans laquelle l'interface de connexion réseau (9) est reliée au réseau étendu (16), directement ou par l'intermédiaire d'un réseau local (16') formant un réseau d'accès, et consistant en une interface de ligne d'abonné numérique, comme un modem ou une interface de câblage, une interface de ligne fibre optique ou une interface radio pour les radiocommunications.

38. Configuration d'interface vidéo selon l'une quelconque des revendications 28 à 37, dans laquelle le module (1) comprend également une interface de caméra vidéo (14') pour connecter au moins une caméra locale (14), des liaisons de transmission avec des webcams à distance étant possible par l'intermédiaire d'une interface de connexion réseau (9).

39. Configuration d'interface vidéo selon l'une quelconque des revendications 28 à 38, dans laquelle le module (1), comprenant de préférence toutes lesdites interfaces (7 à 10, 14' et 15'), constitue un dispositif indépendant dans un boîtier de protection correspondant.

40. Configuration d'interface vidéo selon l'une quelconque des revendications 28 à 38, dans laquelle le module (1), et de préférence toutes les interfaces (7 à 10, 14' et 15'), sont montés à l'intérieur d'un poste de télévision (2), sur une carte de commande électronique de ladite télévision ou au moins partiellement sur une carte séparée, l'unité de traitement numérique dédiée (6) consistant de préférence en un monoprocesseur ou un processeur média et/ou étant identique au processeur de télévision.

41. Système de distribution pour transférer des programmes et des séquences vidéo encodés sur un réseau étendu vers des utilisateurs autorisés ou des abonnés du système pour les afficher sous des conditions données sur des écrans adaptés, à l'aide du procédé de l'une quelconque des revendications 1 à 27 **caractérisé en ce qu'**il comprend, d'une part, un ou plusieurs serveurs multimédia (3), recueillant et stockant au moins des programmes et des séquences vidéo et tous connectés directement ou via un serveur de portail ou de passerelle(4) et/ou un réseau d'accès (16'), au réseau étendu (16) et, d'autre part, une pluralité de configurations d'interface vidéo (1) selon l'une quelconque des revendications 28 à 40 également reliées au réseau étendu (16), et installées au domicile des utilisateurs ou en des emplacements prédéfinis, chaque configuration d'interface vidéo (1) étant associée à au moins un dispositif d'affichage (2) de type écran de télévision.

42. Système de distribution selon la revendication 41, **caractérisé en ce qu'**au moins un serveur multimédia (3) est associé à des moyens de réception d'émission et de télécommunication (5') et **en ce qu'**au moins un serveur multimédia (3) est connecté pour accéder directement au réseau étendu (16).

43. Système de distribution selon l'une quelconque des revendications 41 et 42, **caractérisé en ce que** les serveurs multimédia (3) et/ou le ou les serveurs de portail (4) comprennent des moyens pour encoder et embrouiller des données vidéo, notamment des moyens pour ajouter et embrouiller des informations cryptographiques et de sécurité au début et tout au long des séquences, comme un algorithme de dégradation des données vidéo réduisant la qualité des images à l'affichage, en cas de copie ou de modification non-autorisée d'une séquence.

44. Système de distribution selon l'une quelconque des revendications 41 à 43, **caractérisé en ce que** le serveur multimédia (3) et/ou le serveur de portail (4) comprend un logiciel de décodage ou de désembrouillage préchargé enregistré dans sa mémoire.

45. Système de distribution selon l'une quelconque des revendications 41 à 44, **caractérisé en ce que** le serveur de portail contient des moyens pour conserver ladite seconde partie requise pour regarder le programme vidéo original.
